# EUROPÄISCHE PATENTSCHRIFT

(11) **EP 1 279 054 B1**
(45) Veröffentlichungstag und Bekanntmachung des Hinweises auf die Patenterteilung: **01.12.2004**
(21) Anmeldenummer: 01929620.1
(22) Anmeldetag: 04.05.2001
(51) Int. Cl.: G02B 6/28, G02B 6/42, G02B 6/14

(54) **VORRICHTUNG UND VERFAHREN ZUM ÜBERTRAGEN VON LICHT ÜBER EINE LICHTLEITFASER**
DEVICE AND METHOD FOR TRANSMITTING LIGHT OVER AN OPTICAL FIBER
DISPOSITIF ET PROCEDE DE TRANSMISSION DE LUMIERE PAR L'INTERMEDIAIRE D'UNE FIBRE OPTIQUE

(30) Priorität: 05.05.2000 DE 10021940
(43) Veröffentlichungstag der Anmeldung: 29.01.2003
(73) Patentinhaber: Instrument Systems Optische Messtechnik Gmbh, 81673 München (DE)
(72) Erfinder: Kohns, Peter, 53179 Bonn (DE)
(74) Vertreter: Jacoby, Georg, Dr.
(86) Internationale Anmeldenummer: PCT/EP2001/005037
(87) Internationale Veröffentlichungsnummer: WO 2001/086334

(56) Entgegenhaltungen:
- WO-A-97/10524
- WO-A-97/18920
- GB-A- 1 420 458
- US-A- 4 932 748
- US-A- 4 981 333
- US-A- 5 470 330

## Beschreibung

Die Erfindung betrifft eine Vorrichtung und ein Verfahren zum Übertragen von Licht über eine Lichtleitfaser gemäß den Oberbegriffen der Ansprüche 1, 19 bzw. 24.

Ein Anwendungsbeispiel betrifft die Messung photometrischer oder radiometrischer Größen, bei der das Licht zwischen der Einkoppeloptik (erstes optisches Bauteil) und einem geeigneten Meßgerät (zweites optisches Bauteil) über eine Glasfaser (Lichtwellenleiter bzw. Lichtleitfaser) übertragen wird. Die Übertragung über eine Glasfaser hat den Vorteil, daß die beiden optischen Bauteile (hier Einkoppeloptik und Meßgerät) räumlich getrennt sein können, insbesondere wenn eines der beiden optischen Bauteile (hier das Meßgerät) von seinen Ausmaßen sperrig ist und das andere optische Bauteil (hier die Einkoppeloptik) eine kompakte Baueinheit darstellt. Diese räumliche Trennung hat ferner einen Vorteil, wenn ortsaufgelöste Messungen durchgeführt werden sollen (wenn die Einkoppeloptik bewegt werden soll). Außerdem kann bei einer räumlichen Trennung insbesondere bei industriellen Anwendungen das oftmals sehr empfindliche Meßgerät vorteilhaft von dem zu vermessenden Prozeß abgeschirmt werden.

Es besteht zwar auch die Möglichkeit, bei einer räumlichen Trennung der beiden optischen Bauteile voneinander, das von dem einen optischen Bauteil gesammelte Licht als freien Strahl in das andere optische Bauteil (Meßgerät) zu leiten. Dies hat jedoch den grundsätzlichen Nachteil, daß aufgrund der geradlinigen Ausbreitung des freien Lichtstrahls aufwendige Spiegeloptiken als Strahlführung verwendet werden müssen. Außerdem treten noch zusätzlich Schwierigkeiten auf, wenn beispielsweise die Einkoppeloptik bewegt werden muß, beispielsweise zum Abrastern einer zu vermessenden Displayfläche bei ortsaufgelösten Leuchtdichteuntersuchungen.

Daher bietet sich die Übertragung des Lichtstrahls über Glasfaser an. Zum Schutz der Glasfasern sind diese vor den in industriellen Anwendungen vorliegenden rauhen Umgebungsbedingungen gewöhnlich lose in trittsicheren Schutzschläuchen geführt. Der wesentliche Vorteil der Verwendung von Glasfasern ist ihre (gewöhnlich aufgrund der Materialeigenschaften des verwendeten Glasfasermaterials eingeschränkten) Flexibilität. Sie erlaubt grundsätzlich die einfache Übertragung des Meßlichtes von z.B. einer bewegten Einkoppeloptik zu einem stationären Meßgerät.

Die Übertragung des Lichtes zwischen zwei optischen Bauteilen mittels einer Glasfaser weist jedoch den schwerwiegenden Nachteil auf, daß die Transmission des Lichtes durch die Glasfaser sowie die räumliche Verteilung und die Winkelverteilung des Lichtes an der Austrittsseite von der Lage (bzw. dem Verlauf) der Glasfaser abhängt. So ist beispielsweise eine einmal erfolgte Kalibrierung des Gesamtsystems nur solange gültig, wie die Glasfaser nicht bewegt wird. In der oben angesprochenen Displayvermessung werden z.B. beim Bewegen der Glasfaser Änderungen in dem gemessenen Leuchtdichtewert in der Höhe von 20% beobachtet, auch wenn das Display eine homogene (konstante) Leuchtdichteverteilung hat. Somit ist die Verwendung von Glasfasern insbesondere für die Übertragung eines gemessenen Lichtsignals von einem bewegten optischen Bauteil zu einem stationären optischen Bauteil mit großen störenden Auswirkungen auf das gemessene Lichtsignal verbunden.

Um die unerwünschte Auswirkung der Transmissionsänderung bei Lageänderungen der Glasfaser zu verringern, wurde vorgeschlagen, das Licht anstelle über eine- einzelne Glasfaser über ein Faserbündel bestehend aus vielen (einigen Hundert) einzelnen Glasfasern zu übertragen, so daß sich die Transmissionsänderungen der einzelnen Glasfasern beim Bewegen des gesamten Bündels ausmitteln und so die Transmissionsänderung des gesamten Faserbündels reduziert wird (wobei gleichzeitig die flexible Lichtübertragung zwischen Einkoppeloptik und optischem Meßgerät vorteilhaft erhalten bleibt). Der Nachteil dieser Lösung liegt (neben den deutlich höheren Kosten für das Faserbündel) in der wesentlich geringeren Gesamttransmission des Faserbündels im Vergleich zu Einzelfaser gleichen Durchmessers, da nur ein geringerer Anteil des Faserbündelquerschnitts zum Lichttransport beiträgt. Dies verlängert bei vielen optischen Meßanwendungen in nicht zu vertretender Weise die Meßzeit, wenn ein bestimmtes Signal/Rausch-Verhältnis angestrebt wird.

In der Literatur sind Verfahren für Multimode-Fasern mit sehr geringem Kerndurchmesser (kleiner als 100 Mikrometer) unter der Bezeichnung "microbending" bekannt. Hierbei wird längs der Faser ein örtlich variierender Querdruck auf die Faser ausgeübt, so daß die Faser über eine bestimmte Strekke mit Krümmungsradien von unter einem Zentimeter geführt wird. Zur Erzielung des Querdrucks sind kammartige Strukturen gebräuchlich, die über eine Stellschraube mit einstellbarem Druck gegen die Faser gedrückt werden. Es wurde auch vorgeschlagen, die Faser über eine bestimmte Strecke durch einen Behälter mit Bleischrot zu führen, um so eine örtlich verteilte Querkraft auf die Faser auszuüben. Die Lösungsansätze zielen meist darauf ab, in der Nachrichtentechnik die während der Übertragung eines einzelnen Pulses sich ausbildenden Moden so am Faseraustrittsende zu überlagern, daß die Moden nicht als zeitlich getrennte Pulse austreten (die ja als unterschiedliche Pulse detektiert werden könnten), sondern einen einzelnen zeitlich verbreiterten Puls bilden. Es sei an dieser Stelle angemerkt,.daß in der Nachrichtentechnik durch "Wackeln" der Lichtleitfaser auftretende niederfrequente Effekte (das "Wackeln" spielt sich maximal im Millisekundenbereich ab) bei Pulsfrequenzen im Gigahertz-Bereich keine Rolle spielen, da diese niederfrequenten Effekte ohnehin anschließend ausgefiltert werden.

Es ist ferner bekannt, beispielsweise auf dem Gebiet der optischen Meßtechnik sogenannte Dickkern-Fasern als Lichtleitfaser einzusetzen, um gegenüber beispielsweise bei der Nachrichtenübertragung eingesetzten Singlemode-Fasern eine ausreichende Lichtmenge zwischen den beiden optischen Bauteilen (insbesondere einer Einkoppeloptik und einem optischen Meßgerät) übertragen zu können. Es sei an dieser Stelle angemerkt, daß ein Nachteil der Dickkern-Fasern eine geringere Biegefähigkeit aufgrund ihres größeren Durchmessers ist.

Aus der gattungsgemäßen US 5,408,551 und der FR 247 8828 ist bekannt, daß das gekrümmte starre Führen einer Lichtleitfaser (in der US-Druckschrift ein Glasfaserstab und in der FR-Druckschrift eine Glasfaser) eine Modenmischung hervorruft, was zu einer Homogenisierung des Lichtstrahlprofils führt, wenn die Krümmung entsprechend dimensioniert ist.

Aus der US-4,669,467 ist ein Katheter bekannt, in dem ein Faserbündel innerhalb des Katheters von einer Laserlicht-Einkoppelseite bis zum distalen Ende des Katheters geführt ist, um mit dem durch das Faserbündel übertragenen Laserlicht beispielsweise Plaques in verstopften Arterien abzutragen. An der Laserlicht-Einkoppelseite ist ein Modenmischer vorgesehen, welcher die Modenmischung über das oben genannte "micro-bending"-Verfahren durchführt, damit eine maximale Lichtfleckgröße des aus jeder Einzelfaser austretenden Laserstrahls am distalen Ende des Faserbündels erzielt wird.

In der Praxis werden jedoch trotz der vorteilhaften eingesetzten Modenmischung weiterhin Transmissionsänderungen abhängig von Lageänderungen der Lichtleitfaser beobachtet.

Der Erfindung liegt die Aufgabe zugrunde, bei einer herkömmlichen Übertragung des Lichts mittels einer Lichtleitfaser zwischen zwei optischen Bauteilen einer optischen Meßvorrichtung die durch eine zugelassene Lageveränderung der Lichtleitfaser hervorgerufene Auswirkung auf das übertragene Licht (insbesondere auf den Meßwert) weiter zu vermindern.

Die Erfindung löst diese Aufgabe jeweils mit den Gegenständen der Ansprüche 1, 19 und 24. Bevorzugte Ausführungsbeispiele der Erfindung sind in den Unteransprüchen beschrieben.

Bei einer gattungsgemäßen Vorrichtung ist das Führungsmittel derart ausgestaltet, daß es eine Dickkern-Faser als Lichtleitfaser führt. Ferner ist ein mit dem Modenmischer starr verbundenes Versteifungsmittel zum starren Führen eines zweiten Teilabschnitts der Dickkern-Faser vorgesehen, der sich an den ersten Teilabschnitt anschließt und im wesentlichen bis zum optischen Bauteil an der Auskoppelseite verläuft, wobei das Versteifungsmittel bei Verwendung in der optischen Anordnung mit dem optischen Bauteil am Auskoppelende starr verbunden ist und die Länge des ersten und des zweiten Teilabschnitts wenigstens so bemessen ist, daß das Auskoppelende der Dickkern-Faser mechanisch stabilisiert ist. Bei einem gattungsgemäßen Verfahren wird das Licht über eine Dickkern-Faser übertragen. Ferner wird das Licht vom ersten Teilabschnitt bis im wesentlichen zum Auskoppelende der Dickkern-Faser durch einen zweiten starr geführten Teilabschnitt der Dickkern-Faser übertragen, wobei der zweite Teilabschnitt mit dem optischen Bauteil am Auskoppelende starr verbunden ist und die Gesamtlänge vom ersten und zweiten Teilabschnitt wenigstens so bemessen ist, daß das Auskoppelende der Dickkern-Faser mechanisch stabilisiert ist.

Der Vorteil der Erfindung liegt darin, daß Änderungen der Fasertransmission aufgrund von Lageänderungen der Dickkern-Faser bei vergleichsweise kompakter Bauweise der Vorrichtung folgendermaßen wirksam unterdrückt werden: Mit der Einkopplung des Lichtes in Lichtleitfasern werden gewöhnlich nicht alle transversale Transmissionsmoden angeregt. Dies führt zu einem inhomogenen Strahlprofil am Auskoppelende der Lichtleitfaser, das sich zudem bei einer Bewegung der Lichtleitfaser noch ändern kann. Ein inhomogenes Strahlprofil führt aber insbesondere bei solchen optischen Meßgeräten zu Meßfehlern, die aufgrund ihrer Funktion einen Teil des Strahlprofils abblenden müssen (z.B. ein Gitter-Spektrometer mit seinem spezifischen Eintrittsspalt). Um hier Abhilfe zu schaffen, ist der Modenmischer (der gekrümmte starre Teilabschnitt) eingefügt worden, dessen Krümmung einen ersten Grenzwert unterschreitet. Dieser Grenzwert für die Faserkrümmung hängt selbstverständlich von dem verwendeten Material, dem Durchmesser und der Länge der Dickkern-Faser, dem Gesamtaufbau der optischen Anordnung (insbesondere der Einkopplung des Lichtstrahls in die Dickkern-Faser) sowie dem geforderten Grad der Modenmischung bzw. Homogenisierung ab. Da sich die Homogenisierung des Lichtbündels jedoch leicht messen läßt, läßt sich der Grenzwert abhängig von den erwähnten Parametern (d.h. dem konkreten Meßaufbau) experimentell leicht bestimmen und die gekrümmte Führung entsprechend dimensionieren.

Zu diesem Grenzwert wird hinsichtlich der erfindungsgemäßen Verwendung von Dickkern-Fasern als Lichtleitfaser noch folgendes angemerkt: Zwar ist in vielen Prospekten mit Verwendungshinweisen der Dickkern-Fasern angegeben, daß der minimale Krümmungsradius den 300fachen Faserdurchmesser nicht unterschreiten soll. Dies bedeutet beispielsweise bei einer Dickkern-Faser mit einem Faserdurchmesser von 600 Mikrometern einen minimalen Biegeradius von 18 cm, was für das Modenmischen (siehe nachstehend) nicht ausreicht. Es ist jedoch festgestellt worden, daß mit diesen Dickkern-Fasern deutlich geringere Krümmungsradien erzielt werden können. Die Einschränkung der Faserhersteller scheint darauf zu beruhen, daß sie Dickkern-Fasern hauptsächlich für die Übertragung von hohen Lichtleistungen in der Materialbearbeitung fertigen. Bei kleinen Biegeradien tritt ein Teil des Lichtes aus der Faser aus, ein weiterer Teil wird in Mantelmoden (siehe unten) umgewandelt. Beides hat bei hohen Lichtleistungen die Zerstörung der Faser durch erhöhte Lichtabsorption in der Faser zur Folge. In der Meßtechnik sind die übertragenen Lichtleistungen jedoch geringer, so daß die Fasern selbst bei so geringen Krümmungsradien nicht zerstört werden können.

Es sei ferner bemerkt, daß bei weitestgehender Mischung der Moden (d.h. Anregung nahezu aller transversaler Moden) auch der Austrittswinkel des Lichtes aus der Dickkern-Faser den konstanten Wert für die numerische Apertur annimmt, so daß sich Lageänderungen der Dickkern-Faser somit nicht mehr auf den Austrittswinkel auswirken bzw. vernachlässigbar sind. Dies ist für die Konstanz des Meßsignals z.B. bei Verwendung eines Spektrometers wünschenswert. Auch der Austrittswinkel und die Intensitätsverteilung des die Dickkern-Faser verlassenden Lichtes lassen sich leicht messen, indem beispielsweise das aus der Dickkern-Faser austretende Licht auf eine senkrecht zur Faser ausgerichtete Fläche gestrahlt wird und die Form des dort projizierten Lichtflecks untersucht wird. Damit läßt sich der erste Grenzwert beispielsweise durch eine Untersuchung des Krümmungswinkels bestimmen, bei dem die Größe des projizierten Lichtflecks ein Maximum annimmt. Dies bedeutet nicht zwangsläufig, daß auch alle Moden angeregt sind. Es kann in diesem Fall jedoch davon ausgegangen werden, daß auch eine weitestgehende Homogenisierung des Lichtstrahlprofils vorliegt.

Weiterhin ist erkannt worden, daß durch eine in der Praxis kaum zu verhindernde unpräzise Einkopplung des zu übertragenden Lichtes in die Dickkern-Faser sogenannte Mantelmoden angeregt werden, die nicht im Faserkern, sondern im Fasermantel laufen. Je nach Lage der Dickkern-Faser werden diese Mantelmoden unterschiedlich stark gedämpft, so daß die gesamte Fasertransmission von der Lage der Dickkern-Faser abhängt. Die Änderung der Fasertransmission wird dabei maßgeblich von der unterschiedlichen Dämpfung der Mantelmoden beeinflußt, so daß eine Unterdrückung der Mantelmoden einer Änderung der Fasertransmission aufgrund einer Lageänderung der Dickkern-Faser vorteilhaft entgegenwirken kann. Grundsätzlich werden diese Mantelmoden ebenfalls an gekrümmten Stellen (im Modenmischer) der Dickkern-Faser komplett abgeschält, wobei der zum Abschälen erforderliche Krümmungswinkel in der Regel schwächer als der zum Modenmischen erforderliche Krümmungswinkel (erster Grenzwert) ist. Dabei ist weiterhin erkannt worden, daß an diesen gekrümmten Stellen der Dickkern-Faser jedoch wieder neue Mantelmoden angeregt werden, da einige Lichtstrahlen nun unter einem steileren Winkel vom Faserkern auf den Fasermantel treffen und somit den Winkel für Totalreflexion an der Kern/Mantel-Grenzfläche überschreiten. Diese erneut angeregten Mantelmoden werden nunmehr weiter über die Dickkern-Faser übertragen. Wenn der Rest der Dickkern-Faser vom Modenmischer bis zum Auskoppelende weiterhin flexibel geführt ist, dann können Lageänderungen der Faser in diesem Bereich zu einer unterschiedlichen Dämpfung der im Modenmischer neu entstandenen Mantelmoden und damit zu einer unerwünschten Transmissionsänderung führen. Die Erfindung hat hier Abhilfe geschaffen, indem sie den verbleibenden Teil der Dickkern-Faser vom Modenmischer bis zum Auskoppelende starr in einem Versteifungsmittel führt. Dabei ist die gesamte starre Führung der Dickkern-Faser im Führungsmittel und im Versteifungsmittel wenigstens so in der Länge bemessen, daß Änderungen der Dickkern-Faserlage vor dem Modenmischer keine Lageänderungen der Faser mehr nach dem Modenmischer hervorrufen. Wenn das Führungsmittel allein beispielsweise die Dickkern-Faser über eine solche Länge führt, daß solche Lageänderungen der Faser am Auskoppelende ausgeschlossen sind, dann kann das Versteifungsmittel in seiner Länge bis auf Null reduziert werden, sofern der Modenmischer also direkt am Auskoppelende angeordnet ist (vgl. auch unabhängiger Anspruch 24). Ferner kann bei einer genügend starren Dickkern-Faser auch noch ein kurzes Faserende ungeführt aus dem Versteifungsmittel herausragen und bis zum Auskoppelende verlaufen, solange Lageänderungen dieses Faserendes aufgrund dessen Starrheit angeschlossen werden können bzw. so gering sind, daß die damit verbundenen Änderungen der Fasertransmission in Kauf genommen werden.

Die Gesamtlänge des ersten und des zweiten Teilabschnitts kann leicht experimentell bestimmt werden, indem untersucht wird, ab welcher Länge das Auskoppelende der Dickkern-Faser trotz starken Bewegens der Dickkern-Faser vor dem Modenmischer still ruht.

Bezüglich des Führungsmittels wird ferner angemerkt, daß die geführte Länge des gekrümmten Teilabschnitts der Dickkern-Faser bevorzugt einen bestimmten Wert überschreiten sollte. Auch dieser Wert läßt sich leicht experimentell bestimmen, indem nämlich untersucht wird, ab welcher Länge die erwünschten Effekte eintreten. Es hat sich jedoch gezeigt, daß bei geeigneter Krümmung die maßgebliche Größe der Krümmungswinkel ist und die Länge der starren gekrümmten Führung nur eine untergeordnete Rolle spielt.

Bevorzugt ist ein Verbindungsmittel an der Schnittstelle zwischen der Dickkern-Faser und dem optischen Bauteil am Einkoppel- und/oder Auskoppelende zum lösbaren Verbinden der Dickkern-Fasern mit dem jeweiligen optischen Bauteil vorgesehen. Damit können vorteilhaft mittels eines einfachen Steckersystems als Verbindungsmittel unterschiedliche optische Bauteile über die Dickkern-Faser miteinander gekoppelt werden. So können beispielsweise unterschiedliche Einkoppeloptiken abhängig von dem zu untersuchenden Prozeß an ein und dasselbe optische Meßgerät angeschlossen werden. Das Führungsmittel kann dabei - ohne das zusätzliche Versteifungsmittel - direkt starr mit dem Verbindungsmittel gekoppelt sein, solange die Gesamtlänge von Verbindungsund Führungsmittel ausreicht, das Auskoppelende der Dickkern-Faser ausreichend stabil zu fixieren (s.o.)

Bevorzugt ist ein weiteres bei Verwendung in der optischen Anordnung mit dem optischen Bauteil am Einkoppelende starr verbundenes Versteifungsmittel zum starren Führen eines dritten Teilabschnitts der Dickkern-Faser vorgesehen, der bis zum optischen Bauteil am Einkoppelende verläuft, wobei die Länge des dritten Teilabschnitts wenigstens so bemessen ist, daß das Einkoppelende der Dickkern-Faser stabilisiert ist. So ist weiterhin erkannt worden, daß insbesondere eine Bewegung (z.B. Verkippung) der Stirnfläche der Dickkern-Faser relativ zu dem jeweiligen optischen Bauteil starke Auswirkungen auf das übertragene (Meß)Lichtsignal hervorruft. Dieses Problem tritt vor allem bei handelsüblichen Steckverbindungen auf (z.B. SMA-Stecker), welche die Dickkern-Faser im Prinzip nur punktuell fixieren. Solche Stecker haben in der Regel lediglich eine Stekkerlänge von einem Zentimeter, wobei die Dickkern-Faser (mit einem Durchmesser von bis zu einem Millimeter) im Inneren des Steckers somit nur punktuell befestigt sind. Aufgrund des großen Faserdurchmessers und der damit verbundenen großen wirkenden Kräfte bei einer Bewegung der Dickkern-Faser führt diese punktuelle Fixierung der Dickkern-Faser zu Winkelbewegungen der Faserstirnfläche, auch wenn die Bewegung der Faser einige 10 Zentimeter von dem Verbindungsmittel erfolgt. Dieses Problem wird nunmehr vorteilhaft dadurch behoben, daß zusätzlich zu dem Verbindungsmittel noch ein weiteres Versteifungsmittel vorgesehen ist, welches die Dickkern-Faser an der Einkoppelseite über einen längeren Abschnitt fixiert, so daß sich Bewegungen der Dickkern-Faser nicht mehr auf die Faserstirnfläche übertragen können.

Wiederum hängt die Länge des dritten Teilabschnitts von dem Durchmesser und Material der Dickkern-Faser sowie dem Verbindungsmittel ab, was sich jedoch durch leicht durchführbare Experimente ermitteln läßt.

Sollte kein Verbindungsmittel an einer Schnittstelle zu einem optischen Bauteil vorgesehen sein, sondern die Dickkern-Faser unmittelbar aus diesem optischen Bauteil heraus geführt werden, so kann sich das jeweilige Versteifungsmittel selbstverständlich (beispielsweise mit dem Gehäuse dieses optischen Bauteils starr gekoppelt) unmittelbar an diese Schnittstelle anschließen.

Bevorzugt sind das Verbindungsmittel und das Versteifungsmittel als eine Baueinheit ausgebildet. Beispielsweise kann unmittelbar ein neues Verbindungsmittel konzipiert werden, welches das Versteifungsmittel bereits aufweist (z.B. kann die Steckerlänge entsprechend der erforderlichen Länge für den zweiten bzw. dritten Teilabschnitt dimensioniert werden, und die Dickkern-Faser innerhalb des Steckers über dessen gesamte Länge fixiert werden). Vorteilhaft werden hierdurch Fertigungskosten eingespart und die spätere Handhabung vereinfacht, da vor Ort keine zwei Bauteile montiert werden müssen.

Bevorzugt ist das Führungsmittel derart ausgebildet, daß der Teilabschnitt der Dickkern-Faser entlang eines Kreisbogenabschnitts mit einem Krümmungswinkel im Bereich zwischen 45° und 90° starr geführt wird. Mit dieser vorteilhaft leicht fertigbaren Ausbildung des Führungsmittel können die gewünschten Effekte bereits erzielt werden. Selbstverständlich sind alle möglichen anderen Ausbildungen des Führungsmittels denkbar, solange die Krümmung entsprechend groß ist.

Bevorzugt ist das Führungsmittel derart ausgebildet, daß die Dickkern-Faser innerhalb des Führungsmittels w-förmig verläuft. Das Führungsmittel kann bevorzugt auch derart ausgebildet sein, daß der Verlauf der Dickkern-Faser innerhalb des Führungsmittels einen im wesentlichen anderthalbfachen Vollkreis vollführt. Besonders bevorzugt ist das letztere Führungsmittel ferner derart ausgebildet, daß der Verlauf der Dickkern-Faser im Bereich des Eintritts und/oder des Austritts in den anderthalbfachen Vollkreis einen Wendepunkt umfaßt. Dabei kann sich an den jeweiligen Wendepunkt noch ein Kreisbogenabschnitt mit einem Krümmungswinkel zwischen 45° und 90° anschließen, dessen Krümmungsradius ebenfalls unter dem ersten Grenzwert liegt. Alternativ ist das Führungsmittel derart ausgebildet, daß der Verlauf der Dickkern-Faser durch das Führungsmittel wenigstens einen Wendepunkt umfaßt. So erfolgt insbesondere durch Wendepunkte im Faserverlauf bzw. durch das Führen der Dickkern-Faser gemäß der obigen Verläufe vorteilhaft die angestrebte Modenmischung zur Anregung einer großen Anzahl von geführten Moden. Dies führt, wie erwähnt, zu der erwünschten Homogenisierung des austretenden Strahlprofils.

Bevorzugt liegt der Krümmungsradius der gekrümmten Teilabschnitte im Bereich zwischen dem 100fachen und 30fachen Durchmesser der Dickkern-Faser. Mit diesem Krümmungsradius ist wiederum für die gängigsten Dickkern-Faser ein oberer Grenzwert angegeben, der unterschritten werden sollte, damit die vorteilhafte Modenmischung und Mantelmodenunterdrückung eintreten kann. Der untere Grenzwert ergibt sich aus dem Bruchverhalten der Dickkern-Fasern. Bevorzugt ist dabei das Führungsmittel derart ausgebildet, daß die geführte, gekrümmte Länge des ersten Teilabschnitts der Dickkern-Faser im wesentlichen zwischen 10 cm und 100 cm liegt.

Bevorzugt können noch folgende Maßnahmen getroffen werden:
- der Modenmischer und das Versteifungsmittel am Auskoppelende werden als eine Baueinheit ausgebildet;
- der Durchmesser der Dickkern-Faser wird größer als 500 Mikrometer gewählt;
- die Länge der Dickkern-Faser zwischen den beiden optischen Bauteilen liegt im wesentlichen im Bereich von 50 cm bis 10 m, insbesondere im Bereich von 1 m und 3 m;
- es wird ferner ein (trittsicherer) Schutzschlauch vorgesehen, in dem die Dickkern-Faser über ihren übrigen Teilabschnitt lose und flexibel geführt ist; und/oder
- das Führungsmittel und/oder das Versteifungsmittel werden als tiefgezogene Bleche und/oder gefräste Baueinheit ausgebildet.

Die Anmelderin behält sich vor, den Gegenstand betreffend das Versteifungsmittel auch unabhängig von dem Führungsmittel weiterzuverfolgen. Nach den obigen Ausführungen trägt das Versteifungsmittel auf seine Weise zu einer Verminderung der Meßwertänderung aufgrund von Lageänderungen der Dickkern-Faser bei. Daher kann der Durchschnittsfachmann ggf. auch dieses Versteifungsmittel allein als Kompensationsmaßnahme wählen, ohne das zusätzliche Führungsmittel.

Nachfolgend werden weitere Vorteile und Merkmale der Erfindung anhand bevorzugter Ausführungsbeispiele mit Bezug auf die beigefügte Zeichnung näher erläutert, in der:
- Fig. 1 bis 3: schematische Darstellungen alternativer Ausbildungen des Führungsmittels und eines Versteifungsmittels an Teilabschnitten einer Dickkern-Faser zeigen; und
- Fig. 4: eine schematische Ansicht eines Verbindungsmittels zeigt, das mit einem Versteifungsmittel und der Dickkern-Faser gekoppelt ist.

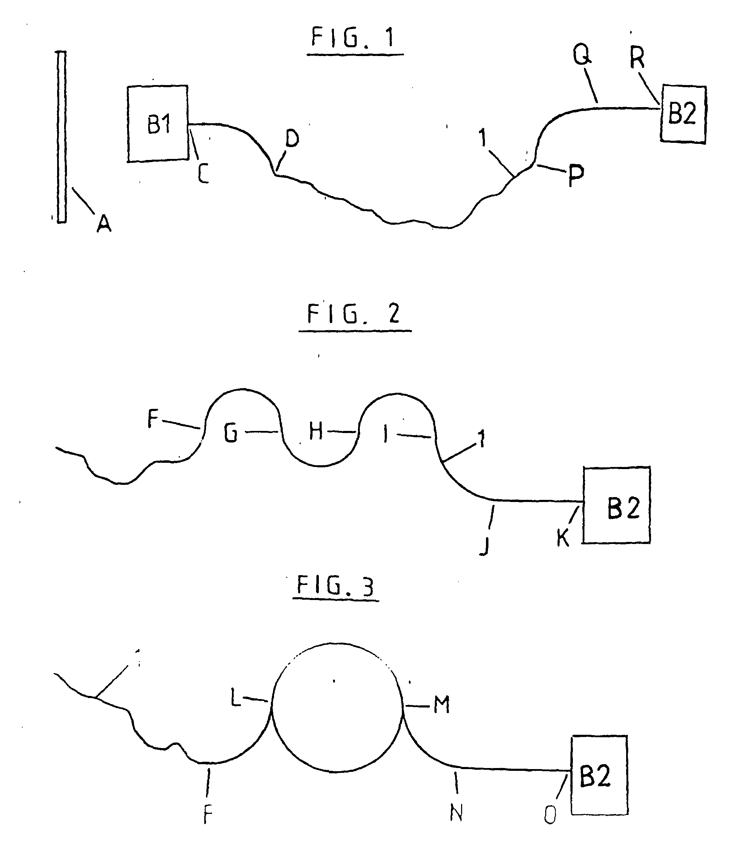

In den Figuren 1 bis 3 bezeichnen das Bezugszeichen A ein zu untersuchendes Objekt (beispielsweise ein zu vermessendes Display), das Bezugszeichen B1 ein erstes optisches Bauteil (beispielsweise eine Einkoppeloptik B1), C bis R verschiedene Teilabschnitte einer Dickkern-Faser 1, die von dem Führungsmittel bzw. dem Versteifungsmittel auf unterschiedliche Weise geführt sind, und B2 ein zweites optisches Bauteil (beispielsweise ein optisches Meßgerät) einer optischen Meßvorrichtung.

Die optische Meßvorrichtung kann beispielsweise für die Spektroradiometrie (kalibrierte Analyse von Licht aus Strahlungsquellen, wie der Sonne, Leuchtmitteln, etc.), die Photometrie (Messung der für das menschliche Auge sichtbaren Strahlung), die Spektroskopie usw. vorgesehen sein, wobei es insbesondere darauf ankommt, auch absolute Lichthelligkeitswerte zu messen. Bei solchen Messungen können Transmissionsänderungen oder Änderungen der Lichtverteilung an dem Faseraustrittsende der das Licht übertragenden Dickkern-Faser 1 das Meßergebnis stark verfälschen. Solche Messungen finden beispielsweise bei der Qualitätskontrolle von LEDs statt, bei denen die optischen Eigenschaften der LEDs (Lichtstärke, Lichtfluß, dominante Wellenlänge und Farbort). gemessen werden. Ortsaufgelöste Messungen werden beispielsweise für die Qualitätskontrolle von gefertigten Displays benötigt, für welche die Luminanz-, Chrominanz- und Helligkeitswerte aus unterschiedlichen Blickwinkeln auf das Display und für unterschiedliche Displaybereiche vermessen werden müssen.

Für die Untersuchung folgender Lichtquellen (Objekt A) werden beispielsweise folgende Einkoppeloptiken (optisches Bauteil B1) verwendet und folgende Größen (Radiometrische bzw. Photometrische Einheit) gemessen: Tungsten-Halogenlampe - integrierende Kugel - Strahlungsleistung bzw. Lichtfluß; LED - LED-Adapter - Strahlstärke bzw. Lichtstärke; Sonne - externe Lichtsonde - Bestrahlungsstärke bzw. Beleuchtungsstärke; Display - Teleskopkopf - Strahldichte bzw. Leuchtdichte. Als optisches Meßgerät B2 kann hierfür beispielsweise ein Spektrometer verwendet werden, wobei das Gesamtsystem (Einkoppeloptik, Dickkern-Faser und Spektrometer) in der entsprechenden Einheit kalibriert sein muß.

Fig. 1 zeigt ein erstes Ausführungsbeispiel für die Anordnung eines Versteifungsmittels in Kombination mit einem Führungsmittel gemäß einer ersten Ausbildung zum starren bzw. gekrümmten, starren Führen von Teilabschnitten einer Dickkern-Faser 1 im Faseraustrittsbereich sowie eines Versteifungsmittels zum starren Führen eines weiteren Teilabschnitts der Dickkern-Faser 1 im Fasereintrittsbereich. Das Licht wird von dem zu vermessenden Objekt bzw. Prozeß A über eine Einkoppeloptik B1 in die Dickkern-Faser 1 eingekoppelt. Die Dickkern-Faser 1 wird hierzu unmittelbar nach dem Ausgang der Einkoppeloptik B1 über eine bestimmte Länge zwischen den Punkten C und D von einem Versteifungsmittel (nicht näher dargestellt) starr aus der Einkoppeloptik B heraus geführt. Dieses Versteifungsmittel dient der Festlegung des Faserendes an der Einkoppelseite, damit bei Bewegen der Dickkern-Faser 1 keine Kippbewegungen des Faserendes an der Einkoppelseite auftritt. Dieses Versteifungsmittel kann die Faser in beliebiger Geometrie führen (bevorzugt in einem 45°-Winkel, ggf. auch geradlinig), wobei seine Führungslänge so gewählt ist, daß die erwünschte Festlegung des Faserendes erzielt wird. Nach diesem Versteifungsmittel ist die Dickkern-Faser 1 beispielsweise lose in einem trittsicheren Führungsschlauch geführt (zwischen Punkten D und P).

An der Auskoppelseite R zu einem optischen Bauteil B2 ist ein Führungsmittel gemäß einer ersten Ausbildung zum gekrümmten Führen eines Teilabschnitts der Dickkern-Faser 1 zwischen Punkten P und Q vorgesehen, das mit einem Versteifungsmittel zum starren Führen eines weiteren Teilabschnitts der Dickkern-Faser 1 zwischen den Punkten Q und R (Auskoppelseite) starr gekoppelt ist.

Das Versteifungsmittel kann beispielsweise eine Länge von einigen Zentimetern (z.B. 10 cm) aufweisen, das Führungsmittel kann einen Kreisbogenabschnitt mit einem Krümmungswinkel zwischen 45° und 90° beschreiben (in dem in Fig. 1 dargestellten Ausführungsbeispiel beträgt der Krümmungswinkel 90°), was bei einem bevorzugten Krümmungsradius zwischen dem 100fachen und dem 30fachen des Faserdurchmessers einer geführten Länge innerhalb des Führungsmittels gemäß der ersten Ausbildung von bis zu 20 cm entspricht. Diese in Fig. 1 gezeigte erste Anordnung zeichnet sich somit durch eine besondere Kompaktheit aus. Die Gesamtlänge der Teilabschnitte P und R sowie Q und R ist so bemessen, daß die Dickkern-Faser 1 bei einer Lageänderung zwischen den Punkten D und P am Auskoppelende R festgelegt (stabilisiert) ist und dadurch in dem gekrümmten Teilabschnitt PQ erneut angeregte Mantelmoden immer mit konstanter Intensität bis zum Faserende R übertragen werden. In dem gekrümmten Teilabschnitt PQ findet - wie oben ausgeführt - eine Modenmichung statt und die bis zum Punkt P angeregten Mantelmoden werden unterdrückt. Durch die Modenmischung wir ferner ein konstanter Austrittswinkel des Lichtes aus der Dickkern-Faser mit dem Wert für die numerische Apertur sichergestellt. Das Versteifungsmittel am Auskoppelende R verhindert ferner Kippbewegungen der Faserstirnfläche an der Schnittstelle zwischen der Dickkern-Faser 1 und der Auskoppeloptik B1. Die in dem gekrümmten Teilabschnitt PQ zwangsläufig neu entstehenden Mantelmoden werden durch die starre Führung zwischen P und R nicht von Bewegungen der Faser beeinflußt, so daß sie einen konstanten und damit durch eine geeignete Kalibrierung berechenbaren Einfluß auf die Gesamttransmission der Faser haben.

An dieser Stelle sei angemerkt, daß das Führungsmittel selbstverständlich von seiner äußeren Form nicht dem geforderten gekrümmten Verlauf für die Dickkern-Faser entsprechen muß. Beispielsweise kann das Führungsmittel ein längliches rechteckförmiges Gehäuse aufweisen, in dessen Inneren (ggf. punktförmige) Halterungen zum Halten der Dickkern-Faser derart vorgesehen sind, daß die Dickkern-Faser im Inneren gerade den gewünschten gekrümmten Verlauf annimmt.

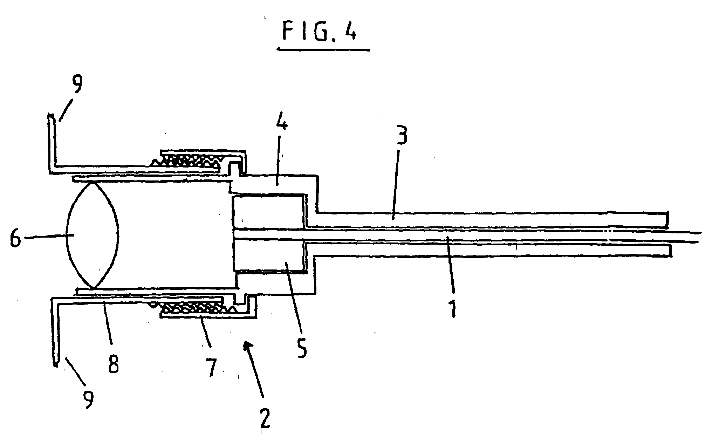

Alternativ können das Versteifungsmittel und das Führungsmittel gemäß der ersten Ausbildung als eine Baueinheit ausgebildet sein. Weiterhin kann an den Schnittstellen zwischen Ein- und/oder Auskoppeloptik B1 und B2 und der Dickkern-Faser 1 je ein Verbindungsmittel (z.B. ein SMA-Stecker) zum lösbaren Verbinden von Einkoppeloptik B1 bzw. B2 und Dickkern-Faser 1 vorgesehen sein. Die Kombination von Verbindungsmittel und Versteifungsmittel wird nachstehend mit Bezug auf Fig. 4 näher erläutert.

Vom Punkt D bis zum Punkt F in der Nähe eines in Fig. 1 nicht dargestellten optischen Meßgeräts P verläuft die Dickkern-Faser 1 lose und flexibel, ggf. geführt in einem trittsicheren Führungsschlauch.

Anstelle des Versteifungsmittels an der Auskoppelseite kann auch unmittelbar anschließend an die Schnittstelle zwischen Dickkern-Faser 1 und Auskoppeloptik B2 ein Führungsmittel gemäß der ersten Ausbildung vorgesehen sein. Dieses Führungsmittel sollte so bemessen sein, das es die Dickkern-Faser 1 über eine bestimmte Länge gekrümmt führt, bei der gewährleistet ist, daß Kippbewegungen der Faserstirnfläche an der Schnittstelle zwischen Auskoppeloptik B2 und Dickkern-Faser 1 effektiv unterdrückt werden. Die Dickkern-Faser 1 wird nämlich durch die Krümmung selbst gegen die Innenfläche dieses Führungsmittels gedrückt und dabei verklemmt. Andererseits sollte der Krümmungsradius der gekrümmten Führung der Dickkern-Faser 1 innerhalb dieses Führungsmittels entsprechend klein sein (kleiner als 10 cm für eine Dickkern-Faser 1 mit wenigstens 500 Mikrometer Kerndurchmesser), damit die oben erwähnten Effekte vorteilhaft erzielt werden. Dieser geschilderte Aufbau entspricht dem Fall, daß die vom Versteifungsmittel geführte Faserlänge gegen Null geht, während die vom Führungsmittel starr und gekrümmt geführte Länge so groß wird, daß der gewünschte Festlegungseffekt des Faseraustrittsendes gewährleistet ist.

Fig. 2 zeigt ein zweites Ausführungsbeispiel für die Anordnung eines Versteifungsmittels und eines Führungsmittels gemäß einer zweiten Ausbildung zum gekrümmten, starren Führen wenigstens eines Teilabschnitts einer Dickkern-Faser 1 im Faseraustrittsbereich. Das Licht wird von einem in Fig. 2 nicht dargestellten optischen Bauteil (z.B. der in Fig. 1 gezeigten Einkoppeloptik B1 gemäß dem in Fig. 1 gezeigten Verlauf der Dickkern-Faser 1) in die Dickkern-Faser 1 eingespeist. Bis zum Punkt F verläuft die Dickkern-Faser 1 beispielsweise lose und flexibel geführt innerhalb eines nicht explizit dargestellten, trittsicheren Führungsschlauches. Zwischen den Punkten F bis I wird die Dickkern-Faser 1 dann starr innerhalb des Führungsmittels gemäß der zweiten Ausbildung geführt, das derart ausgebildet ist, daß die Dickkern-Faser 1 innerhalb des zweiten Führungsmittels w-förmig verläuft. Aufgrund des w-förmigen Verlaufes durchläuft die Dickkern-Faser innerhalb des zweiten Führungsmittels zumindest an den Punkten G und H (in Fig. 2 noch an den Punkten F und I) einen Wendepunkt, an dem die gewünschten Modenmischungen zur Homogenisierung des Lichtstrahlprofils besonders effektiv auftreten. Die Krümmungsradien der runden Ecken des w-förmigen Verlaufes liegen dabei bevorzugt im Bereich zwischen dem 100fachen und dem 30fachen Durchmesser der Dickkern-Faser, damit die erwünschten drei Effekte erzielt werden können.

Zwischen den Punkten I und J verläuft die Dickkern-Faser 1 entlang eines Kreisbogenabschnitts dieses Führungsmittels mit einem Krümmungswinkel von 90°, dessen Krümmungsradius kleiner als der erste Grenzwert zum Erzielen des gewünschten Effektes ist. Zum starren Koppeln der Dickkern-Faser 1 mit dem optischen Meßgerät P wird diese zwischen dem Punkt J und der Schnittstelle K zum optischen Meßgerät B2 in einem Versteifungsmittel geführt, das starr mit dem optischen Meßgerät B2 und starr mit dem ersten Führungsmittel gekoppelt ist. Ferner sind die Gesamtlängen dieses Versteifungsmittels und des Führungsmittels wiederum so bemessen, daß Kippbewegungen der Faserstirnfläche am Austrittsende der Dickkern-Faser 1 in das optische Meßgerät P unterdrückt werden.

Fig. 3 zeigt ein drittes Ausführungsbeispiel für die Anordnung eines Versteifungsmittels sowie eines Führungsmittels gemäß einer dritten Ausbildung zum gekrümmten Führen wenigstens eines Teilabschnitts einer Dickkern-Faser 1 am Faseraustrittsende. Die Dickkern-Faser 1 verläuft bis zum Punkt F beispielsweise wiederum lose geführt in einem trittsicheren Schutzschlauch, vom Punkt F zum Punkt L in einem Kreisbogenabschnitt mit einem Krümmungswinkel von 90° des Führungsmittel gemäß der dritten Ausbildung (Krümmungsradius kleiner als der erste Grenzwert), vom Punkt L zum Punkt M in einem Abschnitt des Führungsmittels, in dem die Dickkern-Faser 1 entlang eines anderthalbfachen Kreises (Krümmungsradius kleiner als der erste Grenzwert) starr geführt ist, vom Punkt M zum Punkt N wiederum in einem Kreisbogenabschnitt mit einem Krümmungswinkel von 90° des Führungsmittel gemäß der dritten Ausbildung (Krümmungsradius kleiner als der erste Grenzwert) und vom Punkt N zu einer Schnittstelle O an dem optischen Meßgerät B2 innerhalb eines Versteifungsmittels. Somit umfaßt der Verlauf der Dickkern-Faser 1 an den Punkten L und M Wendepunkte.

Die einzelnen Ausbildungen des Führungsmittels und das Versteifungsmittel können als tiefgezogene Bleche oder auch als gefräste Strukturen ausgebildet gefertigt sein.

Figur 4 zeigt eine schematische Ansicht eines Verbindungsmittels 2, das mit einem Versteifungsmittel 3 und der Dickkern-Faser 1 gekoppelt ist. Das Verbindungsmittel 2 kann beispielsweise ein handelsüblicher SMA-Stecker o.ä. sein, der an einem Faserende der Dickkern-Faser 1 angebracht ist. Ein geeigneter Stecker weist ein Steckergehäuse 4, das das Faserende der Dickkern-Faser 1 mittels einer Faserhalterung 5 sowie eine Linse 6 trägt, die zum Fokusieren des die Dickkern-Faser 1 verlassenden bzw. in diese eintretenden Lichtstrahls dient. Der Stecker 2 wird mittels eines Rändelrings 7 mit Innengewinde an einem Anschlußstutzen 8 mit Außengewinde an einem Gehäuse 9 des optischen Bauteils B bzw. P befestigt. An dem Austrittsende der Dickkern-Faser 1 aus dem Stecker 2 ist das Versteifungsmittel 3 starr mit dem Stecker 2 gekoppelt. Das Versteifungsmittel 3 bildet in dem in Fig. 4 gezeigten Ausführungsbeispiel eine Baueinheit mit dem Stecker 2, ist also einstückig mit dem letzteren verbunden. Das Versteifungsmittel 3 ist ein starrer Körper mit einer Längsbohrung, deren Durchmesser dem Außendurchmesser der Dickkern-Faser so angepaßt ist, daß die Dickkern-Faser innerhalb der Längsbohrung verklemmt ist. Die Länge des Versteifungsmittels 3 ist so bemessen, daß Schwenkbewegungen der Dickkern-Faser am Austrittsende aus dem Versteifungsmittel 3 sich nicht bis hin zu Kippbewegungen der Faserstirnfläche übertragen.

## Patentansprüche

1. Vorrichtung zum Übertragen von Licht über eine Lichtleitfaser (1) zwischen an einem Einkoppel- (C) und einem Auskoppelende (R; K; O) der Lichtleitfaser (1) vorgesehenen optischen Bauteilen (B1, B2) einer optischen Anordnung, bestehend aus einer Lichtleitfaser und einem Modenmischer mit einem Führungsmittel zum gekrümmten, starren Führen wenigstens eines ersten Teilabschnitts (PQ; IJ; FGHI; FL; LM; MN) der Lichtleitfaser (1), wobei der Krümmungsradius der gekrümmten Führung einen ersten Grenzwert unterschreitet, ab dem das Lichtstrahlprofil von der Lichtleitfaser (1) durch eine Modenmischung homogenisiert wird, **dadurch gekennzeichnet, daß** die Lichtleitfaser eine Dickkernfaser ist, und die Vorrichtung ferner ein mit dem Modenmischer starr verbundenes Versteifungsmittel zum starren Führen eines zweiten Teilabschnitts (QR; JK; NO) der Dickkern-Faser (1) umfaßt, der sich an den ersten Teilabschnitt (PQ; FGHI; IJ; FL; LM; MN) anschließt und im wesentlichen bis zum optischen Bauteil (B2) am Auskoppelende der faser (R; K; O) verläuft, wobei das Versteifungsmittel bei Verwendung in der optischen Anordnung mit dem optischen Bauteil (B2) am Auskoppelende starr verbunden ist und die Gesamtlänge des ersten und des zweiten Teilabschnitts insgesamt wenigstens so bemessen ist, daß das Auskoppelende (R; K; O) der Dickkern-Faser (1) mechanisch stabilisiert ist.

2. Vorrichtung nach Anspruch 1, **dadurch gekennzeichnet, daß** ein Verbindungsmittel (2) an der Schnittstelle (C, R, K; O) zwischen der Dickkern-Faser (1) und dem optischen Bauteil (B1, B2) an dem Ein- (C) und/oder Auskoppelende (R; K; O) zum lösbaren Verbinden der Dickkern-Faser (1) mit dem jeweiligen optischen Bauteil (B1, B2) vorgesehen ist.

3. Vorrichtung nach Anspruch 1 oder 2, **dadurch gekennzeichnet, daß** ein weiteres bei Verwendung in der optischen Anordnung mit dem optischen Bauteil (B1) am Einkoppelende starr verbundenes Versteifungsmittel zum starren Führen eines dritten Teilabschnitts (CD) der Dickkern-Faser (1) vorgesehen ist, der bis zum optischen Bauteil (B1) am Einkoppelende (C) verläuft, wobei die Länge des dritten Teilabschnittes (CD) wenigstens so bemessen ist, daß das Einkoppelende (C) der Dickkern-Faser (1) stabilisiert ist.

4. Vorrichtung nach Anspruch 3, **dadurch gekennzeichnet, daß** das am Auskoppelende (R; K; O) und/oder Einkoppelende (C) vorgesehene Verbindungsmittel (2) mit dem jeweiligen Versteifungsmittel (3) starr gekoppelt ist.

5. Vorrichtung nach Anspruch 3 oder 4, **dadurch gekennzeichnet, daß** das Verbindungsmittel (2) und das Versteifungsmittel (3) als eine Baueinheit ausgebildet sind.

6. Vorrichtung nach einem der vorhergehenden Ansprüche, **dadurch gekennzeichnet, daß** das Führungsmittel derart ausgebildet ist, daß der Teilabschnitt (DE; IJ; FL; MN) der Dickkern-Faser (1) entlang eines Kreisbogenabschnitts mit einem Krümmungswinkel im Bereich zwischen 45° und 90° verläuft.

7. Vorrichtung nach einem der Ansprüche 1 bis 5, **dadurch gekennzeichnet, daß** das Führungsmittel derart ausgebildet ist, daß der Teilabschnitt (FGHI) der Dickkern-Faser (1) w-förmig verläuft.

8. Vorrichtung nach einem der Ansprüche 1 bis 5, **dadurch gekennzeichnet, daß** das Führungsmittel derart ausgebildet ist, daß der Verlauf des Teilabschnitts (LM) der Dickkern-Faser (1) einen im wesentlichen anderthalbfachen Vollkreis vollführt.

9. Vorrichtung nach Anspruch 8, **dadurch gekennzeichnet, daß** das Führungsmittel ferner derart ausgebildet ist, daß der Verlauf der Dickkern-Faser (1) im Bereich des Eintritts (L) und/oder des Austritts (M) in den anderthalbfachen Vollkreis einen Wendepunkt (L; M) umfaßt.

10. Vorrichtung nach Anspruch 9, **dadurch gekennzeichnet, daß** das Führungsmittel derart ausgebildet ist, daß der Teilabschnitt (FL; MN) der Dickkern-Faser (1) im Anschluß an den jeweiligen Wendepunkt (L; M) noch entlang eines Kreisbogenabschnitts mit einem Krümmungswinkel zwischen 45° und 90° verläuft, dessen Krümmungsradius ebenfalls unter dem ersten Grenzwert liegt.

11. Vorrichtung nach einem der Ansprüche 1 bis 5, **dadurch gekennzeichnet, daß** das Führungsmittel derart ausgebildet ist, daß der Teilabschnitt der Dickkern-Faser (1) einen Wendepunkt umfaßt.

12. Vorrichtung nach einem der vorhergehenden Ansprüche, **dadurch gekennzeichnet, daß** der erste Grenzwert im wesentlichen im Bereich zwischen dem 100fachen und dem 30fachen des Durchmessers der Dickkern-Faser liegt.

13. Vorrichtung nach einem der Ansprüche 2 bis 12, **dadurch gekennzeichnet, daß** die Länge des ersten Teilabschnitts (PQ; IJ; FGHI; FL; LM; MN) im wesentlichen im Bereich zwischen 10 cm und 100 cm liegt.

14. Vorrichtung nach einem der vorhergehenden Ansprüche, **dadurch gekennzeichnet, daß** der Modenmischer und das Versteifungsmittel (3) am Auskoppelende als eine Baueinheit ausgebildet sind.

15. Vorrichtung nach einem der vorhergehenden Ansprüche, **dadurch gekennzeichnet, daß** der Durchmesser der Dickkern-Faser (1) größer als 500 Mikrometer ist.

16. Vorrichtung nach einem der vorhergehenden Ansprüche, **dadurch gekennzeichnet, daß** die Länge der Dickkern-Faser (1) zwischen den beiden optischen Bauteilen (B, P) im wesentlichen im Bereich von 50 cm bis 10 m, insbesondere im Bereich von 1 m und 3 m liegt.

17. Vorrichtung nach einem der vorhergehenden Ansprüche, **dadurch gekennzeichnet, daß** ferner ein Schutzschlauch vorgesehen ist, in dem die Dickkern-Faser (1) über ihren übrigen Teilabschnitt (DP) lose geführt ist.

18. Vorrichtung nach einem der vorhergehenden Ansprüche, **dadurch gekennzeichnet, daß** das Führungsmittel und/oder das Versteifungsmittel (3) als tiefgezogene Bleche und/oder gefräste Baueinheit ausgebildet sind.

19. Verfahren zum Übertragen von Licht über eine Lichtleitfaser (1) zwischen an einem Einkoppel- (C) und einem Auskoppelende (R; K; O) der Lichtleitfaser (1) vorgesehenen optischen Bauteilen (B1, B2) einer optischen Anordnung, bei welchem das Licht durch einen gekrümmten, starr geführten Teilabschnitt (PQ; FGHI; IJ; FL; LM; MN) der Lichtleitfaser (1) übertragen wird, wobei der Krümmungsradius des ersten Teilabschnitts (PQ; FGHI; IJ; FL; LM; MN) einen ersten Grenzwert unterschreitet, ab dem das Lichtstrahlprofil von der Lichtleitfaser (1) durch eine Modenmischung homogenisiert wird, **dadurch gekennzeichnet, daß** die Lichtleitfaser (1) eine Dickkern-Faser ist und daß das Licht vom ersten Teilabschnitt (PQ; FGHI; FL; LM; MN) bis im wesentlichen zum Auskoppelende (R; K; O) der Dickkern-Faser (1) durch einen zweiten starr geführten Teilabschnitt (QR; JK; NO) der Dickkern-Faser (1) übertragen wird, wobei der zweite Teilabschnitt (QR; JK; NO) mit dem optischen Bauteil (B2) am Auskoppelende starr verbunden ist und die Gesamtlänge vom ersten und zweiten Teilabschnitt wenigstens so bemessen ist, daß das Auskoppelende (R; K; O) der Dickkern-Faser (1) mechanisch stabilisiert ist.

20. Verfahren nach Anspruch 19, **dadurch gekennzeichnet, daß** das Licht ferner unmittelbar vor der Schnittstelle (C) zum optischen Bauteil (B1) am Einkoppelende (C) durch einen dritten starr geführten Teilabschnitt (CD; JK; NO) der Dickkern-Faser (1) übertragen wird, wobei der dritte Teilabschnitt (CD; JK; NO) mit dem optischen Bauteil (B1) am Einkoppelende starr verbunden ist und die Länge dieses dritten Teilabschnitts (CD) wenigstens so bemessen ist, daß das Einkoppelende (C) der Dickkern-Faser (1) stabilisiert ist.

21. Verfahren nach Anspruch 19 oder 20, **dadurch gekennzeichnet, daß** das Licht durch einen w-förmigen Teilabschnitt (FGHIJ) der Dickkern-Faser (1) übertragen wird.

22. Verfahren nach Anspruch 19 oder 20, **dadurch gekennzeichnet, daß** das Licht durch einen einen anderthalbfachen Vollkreis beschreibenden Teilabschnitt (LM) der Dickkern-Faser (1) übertragen wird.

23. Verfahren nach einem der Ansprüche 19 bis 22, **dadurch gekennzeichnet, daß** das Licht durch einen Teilabschnitt (FLMN) der Dickkern-Faser (1) übertragen wird, dessen Verlauf einen Wendepunkt (L; M) umfaßt.

24. Vorrichtung zum Übertragen von Licht über eine Lichtleitfaser (1) von einem Einkoppelende (C) zu einem Auskoppelende (R; K; O) der Lichtleitfaser (1), welche und ein Verbindungsmittel einen Modenmischer mit einem Führungsmittel zum gekrümmten, starren Führen eines Abschnitts (PQ; IJ; FGHI; FL; LM; MN) der Lichtleitfaser (1) umfaßt, wobei der Krümmungsradius der gekrümmten Führung einen ersten Grenzwert unterschreitet, ab dem das Lichtstrahlprofil von der Lichtleitfaser (1) durch eine Modenmischung homogenisiert wird, **dadurch gekennzeichnet, daß** das Führungsmittel derart ausgestaltet ist, daß es eine Dickkern-Faser als Lichtleitfaser (1) führt, und der Modenmischer bei Verwendung in der optischen Anordnung mit dem optischen Bauteil (B2) am Auskoppelende durch das Verbindungsmittel starr verbunden ist, derart, daß das Auskoppelende (R; K; O) der Dickkern-Faser (1) mechanisch stabilisiert ist.

## Claims

1. Device for the transmission of light via an optical fibre (1) between optical components (B1, B2) provided at a launch end (C) and an extraction end (R; K; O;) of the optical fibre (1) of an optical arrangement (1) comprised of an optical fibre and a mode mixer with guiding means for the curved, rigid guidance of at least one first partial section (PQ; IJ; FGHI; FL; LM; MN) of the optical fibre (1), wherein the radius of curvature of the curved guide is less than a first limiting value, from which the light beam profile of the optical fibre (1) is homogenised by a mode mixing operation, **characterised in that** the optical fibre is a fat fibre and the device further includes stiffening means rigidly joined to the mode mixer for rigidly guiding a second partial section (QR; JK; NO) of the fat fibre (1), which second partial section abuts the first partial section (PQ; FGHI; IJ; FL; LM; MN) and substantially runs up to the optical component (B2) at the extraction end of the fibre (R; K; O), wherein, when used in the optical arrangement), the stiffening means is rigidly joined to the optical component (B2) at the extraction end and the overall length of the first and of the second partial section is on the whole at least designed so that the extraction end (R; K; O) of the fat fibre (1) is mechanically stabilised.

2. Device according to Claim 1, **characterised in that** connecting means (2) are provided at the interface (C, R, K; O) between the fat fibre (1) and the optical component (B1, B2) at the launch end (C) and/or extraction end (R; K; O) for detachably connecting the fat fibre (1) to the respective optical component (B1, B2).

3. Device according to Claim 1 or 2, **characterised in that** when used in the optical arrangement with the optical component (B1) further stiffening means are provided and are rigidly joined to the launch end for the rigid guidance of a third partial section (CD) of the fat fibre (1), which runs up to the optical component (B1) at the launch end (C), wherein the length of the third partial section (CD) is at least designed so that the launch end (C) of the fat fibre (1) is stabilised.

4. Device according to Claim 3, **characterised in that** the connecting means (2) provided at the extraction end (R; K; O) and/or launch end (C), are rigidly coupled to the respective stiffening means (3).

5. Device according to Claim 3 or 4, **characterised in that** the connecting means (2) and the stiffening means (3) are constructed as one unit.

6. Device according to one of the preceding Claims, **characterised in that** the guiding means are constructed in such a way that the partial section (DE; IJ; FL; MN) of the fat fibre (1) runs along a curved section with an angle of curvature in the range between 45° and 90°.

7. Device according to one of Claims 1 to 5, **characterised in that** the guiding means are constructed in such a way that the partial section (FGHI) of the fat fibre (1) runs in the shape of a W.

8. Device according to one of Claims 1 to 5, **characterised in that** the guiding means are constructed in such a way that the course of the partial section (LM) of the fat fibre (1) describes a substantially one and a half full circle.

9. Device according to Claim 8, **characterised in that** the guiding means are further constructed in such a way that the course of the fat fibre (1) in the area of the entry (L) and/or the exit (M) in the one and a half full circle includes an inflection point (L; M;).

10. Device according to Claim 9, **characterised in that** the guiding means are constructed in such a way that the partial section (FL; MN) of the fat fibre (1) following the respective inflection point (L; M;) still runs along a section of an arc having an angle of curvature between 45° and 90°, whose radius of curvature is likewise less than the first limiting value.

11. Device according to one of Claims 1 to 5, **characterised in that** the guiding means are constructed in such a way that the partial section of the fat fibre (1) includes an inflection point.

12. Device according to one of the preceding Claims, **characterised in that** the first limiting value lies substantially in the range between 100 times and 30 times the diameter of the fat fibre.

13. Device according to one of Claims 2 to 12, **characterised in that** the length of the first partial section (PQ; IJ; FGHI; FL; LM; MN) lies substantially in the range between 10 cm and 100 cm.

14. Device according to one of the preceding Claims, **characterised in that** the mode mixer and the stiffening means (3) are constructed as one unit at the extraction end.

15. Device according to one of the preceding Claims, **characterised in that** the diameter of the fat fibre (1) is greater than 500 micrometers.

16. Device according to one of the preceding Claims, **characterised in that** the length of the fat fibre (1) between the two optical components (B, P) lies substantially in the range from 50 cm to 10 m, in particular in the range between 1 m to 3 m.

17. Device according to one of the preceding Claims, **characterised in that**, furthermore, a protective sheath is provided, in which the fat fibre (1) is loosely guided over its remaining partial section (DP).

18. Device according to one of the preceding Claims, **characterised in that** the guiding means and/or the stiffening means (3) are constructed as a deep-drawn sheet and/or a milled unit.

19. Process for transmitting light via an optical fibre (1) between optical components (B1, B2) provided at a launch end (C) and an extraction end (R; K; O;) of the optical fibre (1) of an optical arrangement, by which the light is transmitted through a curved, rigidly guided partial section (PQ; FGHI; IJ; FL; LM; MN) of the optical fibre, wherein the radius of curvature of the first partial section (PQ; FGHI; IJ; FL; LM; MN) is less than a first limiting value, from which the light beam profile of the optical fibre (1) is homogenised by a mode mixing operation, **characterised in that** the optical fibre (1) is a fat fibre and that the light from the first partial section (PQ; FGHI; FL; LM; MN) substantially up to the extraction end (R; K; O) of the fat fibre (1) is transmitted through a second rigidly guided partial section (QR; JK; NO) of the fat fibre (1), wherein the second partial section (QR; JK; NO) is rigidly joined to the optical component (B2) at the extraction end and the overall length of the first and of the second partial section is at least designed so that the extraction end (R; K; O) of the fat fibre (1) is mechanically stabilised.

20. Process according to Claim 19, **characterised in that**, furthermore, the light is transmitted immediately before the interface (C) of the optical component (B1) at the launch end (C) through a third rigidly guided partial section (CD; JK; NO) of the fat fibre (1), wherein the third partial section (CD; JK; NO) is rigidly joined to the optical component (B1) at the launch end and the length of this third partial section (CD) is at least designed so that the launch end (C) of the fat fibre (1) is stabilised.

21. Process according to Claim 19 or 20, **characterised in that**, the light is transmitted through a W-shaped partial section (FGHIJ) of the fat fibre (1).

22. Process according to Claim 19 or 20, **characterised in that**, the light is transmitted through a partial section (LM) of the fat fibre (1), which describes a one and a half full circle.

23. Process according to one of Claims 19 to 22, **characterised in that**, the light is transmitted through a partial section (FLMN) of the fat fibre (1), whose course includes an inflection point (L; M).

24. Device for transmitting light via an optical fibre (1) from a launch end (C) to an extraction end (R; K; O) of the optical fibre, which includes connection means and a mode mixer with guiding means for the curved, 'rigid guidance of a section (PQ; IJ; FGHI; FL; LM; MN) of the optical fibre (1), wherein the radius of curvature of the curved guide is less than a first limiting value, from which the light beam profile of the optical fibre (1) is homogenised by a mode mixing operation, **characterised in that** the guiding means are configured in such a way that they guide a fat fibre as an optical fibre (1), and when used in the optical arrangement the mode mixer is rigidly joined by the connecting means to the optical component (B2) at the extraction end, in such a way that the extraction end (R; K; O) of the fat fibre (1) is mechanically stabilised.

## Revendications

1. Dispositif pour la transmission de lumière au moyen d'une fibre optique (1) entre des composants (B1, B2) optiques prévus sur une extrémité d'injection (C) et une extrémité d'extraction (R ; K ; O) de la fibre optique, d'un dispositif optique comprenant une fibre optique et un mélangeur de modes avec un moyen de guidage pour le guidage incurvé et fixe d'au moins d'un premier tronçon partiel (PQ ; IJ ; FGHI ; FL ; LM ; MN) de la fibre optique (1), le rayon de courbure du guidage incurvé étant inférieur à une première valeur limite, à partir de laquelle le profil de faisceau lumineux de la fibre optique (1) est homogénéisé par un mélange de modes, **caractérisé en ce que** la fibre optique est une fibre à noyau épais, et le dispositif comprend également un moyen de renforcement relié de façon rigide au mélangeur de modes pour le guidage rigide d'un second tronçon partiel (QR ; JK ; NO) de la fibre à noyau épais (1), qui se raccorde au premier tronçon partiel (PQ ; FGHI ; IJ ; FL ; LM ; MN) et est disposé essentiellement jusqu'au composant (B2) optique sur l'extrémité d'extraction de la fibre (R ; K ; O), le moyen de renforcement étant relié de façon fixe, en cas d'utilisation dans le dispositif optique, au composant (B2) optique sur l'extrémité d'extraction et la longueur totale du premier et du second tronçons partiels étant dimensionnée globalement au moins de telle sorte que l'extrémité d'extraction (R ; K ; O) de la fibre à noyau épais (1) est stabilisée au plan mécanique.

2. Dispositif selon la revendication 1, **caractérisé en ce qu'**un moyen de liaison (2) est prévu sur l'interface (C, R, K ; O) entre la fibre à noyau épais (1) et le composant optique (B1, B2) sur l'extrémité d'injection (1) et/ou l'extrémité d'extraction (R ; K ; O) pour l'assemblage amovible de la fibre à noyau épais (1) avec le composant optique (B1, B2) respectif.

3. Dispositif selon la revendication 1 ou 2, **caractérisé en ce qu'**un autre moyen de renforcement, relié de façon fixe, avec l'utilisation dans le dispositif optique, au composant (B1) optique sur l'extrémité d'injection est prévu pour le guidage fixe d'un troisième tronçon partiel (CD) de la fibre à noyau épais (1), qui est agencé jusqu'au composant (B1) optique sur l'extrémité d'injection (C), la longueur du troisième tronçon partiel (CD) étant dimensionnée au moins de telle sorte que l'extrémité d'injection (C) de la fibre à noyau épais (1) est stabilisée.

4. Dispositif selon la revendication 3, **caractérisé en ce que** le moyen de liaison (2) prévu sur l'extrémité d'extraction (R ; K ; O) et/ou l'extrémité d'injection (C) est couplé de façon fixe avec le moyen de renforcement (3) concerné.

5. Dispositif selon la revendication 3 ou 4, **caractérisé en ce que** le moyen de liaison (2) et le moyen de renforcement (3) sont conçus comme un module.

6. Dispositif selon l'une quelconque des revendications précédentes, **caractérisé en ce que** le moyen de guidage est conçu de telle sorte que le tronçon partiel (DE ; IJ ; FL ; MN) de la fibre à noyau épais (1) est agencé le long d'une partie d'arc de cercle avec un angle de courbure situé dans la plage comprise entre 45° et 90°.

7. Dispositif selon l'une quelconque des revendications 1 à 5, **caractérisé en ce que** le moyen de guidage est conçu de telle sorte que le tronçon partiel (FGHI) de la fibre à noyau épais (1) est disposé en forme de w.

8. Dispositif selon l'une quelconque des revendications 1 à 5, **caractérisé en ce que** le moyen de guidage est conçu de telle sorte que le tracé du tronçon partiel (LM) de la fibre à noyau épais (1) effectue pratiquement un cercle et demi complet.

9. Dispositif selon la revendication 8, **caractérisé en ce que** le moyen de guidage est conçu également de telle sorte que le tracé de la fibre à noyau épais (1) comprend un point d'inversion (L ; M) dans la zone de l'entrée (L) et/ou de la sortie (M) dans le cercle et demi plein.

10. Dispositif selon la revendication 9, **caractérisé en ce que** le moyen de guidage est conçu de telle sorte que le tronçon partiel (FL ; MN) de la fibre à noyau épais (1) est agencé à la suite du point d'inversion (L ; M) respectif encore le long d'une partie d'arc de cercle avec un angle de courbure compris entre 45° et 90°, dont le rayon de courbure est situé également au-dessous de la première valeur limite.

11. Dispositif selon l'une quelconque des revendications là 5, **caractérisé en ce que** le moyen de guidage est conçu de telle sorte que le tronçon partiel de la fibre à noyau épais (1) comprend un point d'inversion.

12. Dispositif selon l'une quelconque des revendications précédentes, **caractérisé en ce que** la première valeur limite se situe sensiblement dans la plage comprise entre le 100ème et le 30ème du diamètre de la fibre à noyau épais.

13. Dispositif selon l'une quelconque des revendications 2 à 12, **caractérisé en ce que** la longueur du premier tronçon partiel (PQ ; IJ ; FGHI ; FL ; LM ; MN) se situe sensiblement dans la plage comprise entre 10 cm et 100 cm.

14. Dispositif selon l'une quelconque des revendications précédentes, **caractérisé en ce que** le mélangeur de modes et le moyen de renforcement (3) sont conçus sur l'extrémité d'extraction sous la forme d'un module.

15. Dispositif selon l'une quelconque des revendications précédentes, **caractérisé en ce que** le diamètre de la fibre à noyau épais (1) est supérieur à 500 microns.

16. Dispositif selon l'une quelconque des revendications précédentes, **caractérisé en ce que** la longueur de la fibre à noyau épais (1) entre les deux composants (B, P) optiques se situe sensiblement dans la plage de 50 cm à 10 m, en particulier dans la plage de 1 m et de 3 m.

17. Dispositif selon l'une quelconque des revendications précédentes, **caractérisé en ce qu'**il est prévu également un flexible de protection dans lequel la fibre à noyau épais (1) est guidée de façon libre au moyen de son tronçon partiel (DP) restant.

18. Dispositif selon l'une quelconque des revendications précédentes, **caractérisé en ce que** le moyen de guidage et/ou le moyen de renforcement (3) sont conçus comme des tôles embouties profond et/ou un module fraisé.

19. Procédé pour la transmission de lumière au moyen d'une fibre optique (1) entre des composants (B1, B2) optiques prévus sur une extrémité d'injection (C) et une extrémité d'extraction (R ; K ; O) de la fibre optique (1), d'un dispositif optique, dans lequel la lumière est transmise par un tronçon partiel (PQ ; FGHI ; IJ ; FL ; LM ; MN), incurvé et guidé de façon fixe, de la fibre optique (1), le rayon de courbure du premier tronçon partiel (PQ ; FGHI ; IJ ; FL ; LM ; MN) étant inférieur à une première valeur limite, à partir de laquelle le profil du faisceau lumineux de la fibre optique (1) est homogénéisé par un mélange de modes, **caractérisé en ce que** la fibre optique (1) est une fibre à noyau épais et **en ce que** la lumière est transmise depuis le premier tronçon (PQ ; FGHI ; FL ; LM ; MN) jusqu'à sensiblement l'extrémité d'extraction (R ; K ; O) de la fibre à noyau épais (1) par un second tronçon partiel (QR ; JK ; NO) guidé de façon fixe de la fibre à noyau épais, le second tronçon partiel (QR ; JK ; NO) étant relié de façon fixe au composant (D2) optique sur l'extrémité d'extraction et la longueur totale du premier et du second tronçons partiels est dimensionnée au moins de telle sorte que l'extrémité d'extraction (R ; K ; O) de la fibre à noyau épais (1) est stabilisée au plan mécanique.

20. Procédé selon la revendication 19, **caractérisé en ce que** la lumière est transmise également juste avant l'interface (C) avec le composant (B1) optique sur l'extrémité d'injection (C) par un troisième tronçon partiel (CD ; JK ; NO), guidé de façon fixe, de la fibre à noyau épais (1), le troisième tronçon partiel (CD ; JK ; NO) étant relié de façon fixe au composant (B1) optique sur l'extrémité d'injection et la longueur de ce troisième tronçon partiel (CD) étant dimensionnée au moins de telle sorte que l'extrémité d'injection (C) de la fibre à noyau épais (1) est stabilisée.

21. Procédé selon la revendication 19 ou 20, **caractérisé en ce que** la lumière est transmise par un tronçon partiel (FGHIJ) en forme de w de la fibre à noyau épais (1).

22. Procédé selon la revendication 19 ou 20, **caractérisé en ce que** la lumière est transmise par un tronçon partiel (LM) décrivant un cercle et demi plein de la fibre à noyau épais (1).

23. Procédé selon l'une quelconque des revendications 19 à 22, **caractérisé en ce que** la lumière est transmise par un tronçon partiel (FLMN) de la fibre à noyau épais (1), dont le tracé comprend un point d'inversion (L ; M).

24. Dispositif pour la transmission de lumière au moyen d'une fibre optique (1) d'une extrémité d'injection (C) à une extrémité d'extraction (R ; K ; O) de la fibre optique (1), qui comprend un moyen de liaison et un mélangeur de modes avec un moyen de guidage pour le guidage incurvé et fixe d'une partie (PQ ; IJ ; FGHI ; FL ; LM ; MN) de la fibre optique (1), le rayon de courbure du guidage incurvé étant inférieur à une première valeur limite, à partir de laquelle le profil du faisceau lumineux de la fibre optique (1) est homogénéisé par un mélange de modes, **caractérisé en ce que** le moyen de guidage est conçu de telle sorte qu'il guide une fibre à noyau épais comme fibre optique (1), et le mélangeur de modes est relié de façon fixe par le moyen de liaison au composant (B2) optique sur l'extrémité d'extraction en cas d'utilisation dans le dispositif optique, de telle sorte que l'extrémité d'extraction (R ; K ; O) de la fibre à noyau épais (1) est stabilisée au plan mécanique.
